# FASCICULE DE BREVET EUROPEEN

(11) **EP 3 861 040 B1**
(45) Date de publication et mention de la délivrance du brevet: **10.04.2024**
(21) Numéro de dépôt: 19790683.7
(22) Date de dépôt: 23.09.2019
(51) Int. Cl.: C08F 297/04, B60C 1/00, C08F 212/12

(54) **PROCÉDÉ DE SYNTHÈSE D'UN ÉLASTOMÈRE THERMOPLASTIQUE COMPRENANT AU MOINS UN BLOC POLY(ALPHA-MÉTHYLSTYRÈNE)**
VERFAHREN ZUR SYNTHESE EINES THERMOPLASTISCHEN ELASTOMERS MIT MINDESTENS EINEM POLY(ALPHA-METHYLSTYROL)BLOCK
METHOD FOR SYNTHESISING A THERMOPLASTIC ELASTOMER COMPRISING AT LEAST ONE POLY(ALPHA-METHYLSTYRENE) BLOCK

(30) Priorité: 02.10.2018 FR 1859117
(43) Date de publication de la demande: 11.08.2021
(73) Titulaire: COMPAGNIE GENERALE DES ETABLISSEMENTS MICHELIN, 63000 Clermont-Ferrand (FR)
(72) Inventeur: COSTE, Nathalie, 63040 CLERMONT-FERRAND CEDEX 9 (FR); DIRE, Charlotte, 63040 CLERMONT-FERRAND CEDEX 9 (FR); HABHAB, Karima, 63040 CLERMONT-FERRAND CEDEX 9 (FR); MAXIMIANO-RAIMUNDO, Pedro, 69960 CORBAS (FR)
(74) Mandataire: M.F.P. Michelin
(86) Numéro de dépôt international: PCT/FR2019/052214
(87) Numéro de publication internationale: WO 2020/070406

(56) Documents cités:
- WO-A1-2017/109325
- FR-A1- 2 243 214
- US-A- 4 352 912

## Description

La présente invention concerne un procédé de synthèse d'un copolymère à blocs de type élastomère thermoplastique, un au moins des blocs étant un élastomère diénique et un autre au moins des blocs est constitué de poly(α-méthylstyrène).

Les élastomères thermoplastiques (TPE) sont des élastomères qui sont d'un grand intérêt dans de nombreux domaines du fait de leurs propriétés combinées liées d'une part au bloc élastomère et d'autre part au bloc rigide thermoplastique. Cette phase rigide se ramollit jusqu'à fondre à des températures dépassant la température de transition vitreuse (Tg) ou la température de fusion (Tf) du bloc thermoplastique, et retrouve sa rigidité lorsque la température revient au niveau de la température de fonctionnement. Cette particularité du TPE implique un potentiel d'application très large.

Parmi les élastomères thermoplastiques les plus répandus, on trouve les copolymères à blocs styréniques. Or, la température de transition vitreuse des blocs polystyrène de ces copolymères est aux alentours de 80°C à 100°C selon la taille des blocs styréniques. Pour certaines applications, la valeur de la température de transition vitreuse des blocs polystyrène est insuffisante. En effet, cette valeur ne permet pas d'envisager l'utilisation de ces TPE pour la fabrication de certains objets soumis notamment à des conditions d'utilisation spécifiques où les températures dépassent les 100°C.

Il peut donc s'avérer nécessaire de remplacer les blocs rigides polystyrène par des blocs rigides ayant une température de transition vitreuse supérieure à 100°C. Une solution envisagée dans l'état de l'art, est de substituer le polystyrène par du poly-(α-méthylstyrène) dont la température de transition vitreuse peut atteindre 170°C.

Plusieurs voies de synthèse peuvent permettre de polymériser l'α-méthylstyrène comme la polymérisation cationique, radicalaire et anionique. Néanmoins, quelle que soit la voie abordée, la polymérisation de l'α-méthylstyrène est toujours limitée par un équilibre chimique dépendant à la fois de la température plafond de polymérisation et de la concentration en α- méthylstyrène dans le milieu réactionnel. Une concentration élevée en monomère tend à déplacer l'équilibre vers la formation de polymère ou, lorsque la concentration en monomère est faible, une faible température tend à déplacer l'équilibre vers la formation de polymère (H. W. Mc Cormick, J. Polymer Science, 1957, 488-490).

Pour la synthèse de copolymère à bloc poly(alpha-méthylstyrène)-b-poly(diène conjugué), si le bloc poly(alpha-méthylstyrène) a été réalisée en milieu concentré, il est nécessaire pour l'étape de polymérisation du diène d'augmenter la température et/ou d'introduire du solvant pour diluer le milieu réactionnel. Dans ces conditions, l'équilibre chimique poly(alpha-méthylstyrène) / alpha-méthylstyrène va se déplacer naturellement vers la dépolymérisation et la formation de monomère alpha-méthylstyrène. Cela aura pour conséquence une diminution de la masse molaire des blocs thermoplastiques rigides poly(alpha-méthylstyrène) et une augmentation de la quantité d'alpha-méthylstyrène résiduel en fin de polymérisation, qui devra être séparé et recyclé. La diminution de la masse molaire des blocs thermoplastiques poly(alpha-méthylstyrène) a un impact direct sur leur Tg, et donc sur les propriétés thermo-mécaniques du copolymère. Par le passé, la littérature a décrit de nombreuses synthèses de TPE à blocs thermoplastiques à base d'α-méthylstyrène dans le but d'améliorer la tenue thermique de TPE styrénique en mettant en oeuvre divers moyens pour palier le risque de dépolymérisation et la formation d'α-méthylstyrène.

WO2007112232A2 décrit la synthèse d'un TPE tribloc à base d'α-méthylstyrène en trois étapes. La première étape consiste en la polymérisation anionique de l'α-méthylstyrène en milieu concentré en présence de styrène, à haute température (70°C) et en présence d'éther diéthylique dans un premier réacteur. L'ajout continu de styrène, à un débit maîtrisé, lors de la polymérisation dans le premier réacteur permet d'avoir une répartition statistique des motifs styrène/α-méthylstyrène et d'atteindre des taux de conversion élevés pour l'α-méthylstyrène. Dans le second réacteur, la polymérisation du diène conjugué est effectuée en présence des chaînes vivantes de poly(styrène-co-α-méthylstyrène). La troisième étape consiste en la terminaison de la polymérisation par réaction avec un agent de couplage alkoxysilane permettant de générer le copolymère tribloc.

D'autres documents, tels que WO8505116A1, EP0014947A1 et EP0135169A2, décrivent la synthèse d'élastomères thermoplastiques à base d'α-méthylstyrène. Afin d'atteindre un taux de conversion élevé d'α-méthylstyrène, ce dernier est copolymérisé avec le styrène par voie anionique pour générer le bloc thermoplastique stable. Pour obtenir le copolymère tribloc de type poly(α-méthylstyrène-co-styrène)-polydiène-poly(α-méthylstyrène-co-styrène), la synthèse est réalisée en présence d'un initiateur difonctionnel et à haute température (au-delà de 50°C). La copolymérisation de l'α-méthylstyrène et du styrène est initiée par une chaîne polybutadiényldilithium obtenue dans une étape précédente, et réalisée en présence d'α-méthylstyrène en une ou deux étapes avec un ajout ultérieur de styrène.

La contrepartie de ces méthodes qui privilégient un taux de conversion élevé de l'α-méthylstyrène en utilisant le styrène comme co-monomère, est que la Tg des blocs thermoplastiques, certes supérieure à celle d'un homopolymère de styrène, reste très inférieure à celle du poly-(α-méthylstyrène) et parfois au-dessous de certaines températures d'usage des matériaux à base d'un élastomère thermoplastique. En outre, la présence du co-monomère a un impact sur les propriétés thermo-mécaniques de l'élastomère thermoplastique.

Dans le document FR2243214B1, un procédé de synthèse, productif et simplifié, de copolymère tribloc poly(alpha-méthylstyrène)-b-polydiène-b-poly(alpha-méthylstyrène) est proposé. Il consiste, dans une première étape, à homopolymériser l'alpha-méthylstyrène dans des conditions de concentration en monomère élevée qui favorise la formation du polymère. Cela permet de travailler à des températures aisément accessibles et peu coûteuses en énergie (0 - 40°C) et d'obtenir des vitesses de polymérisation élevées. A l'issue de cette première étape, une petite quantité de diène conjugué doit être ajoutée pour stabiliser les chaînes vivantes poly(alpha-méthylstyrène) et éviter leur dépolymérisation lors de l'ajout du diène conjugué et du solvant nécessaires à la synthèse du bloc poly(diène conjugué) dans une étape ultérieure.

Dans le brevet US4302559A, la synthèse de copolymère à blocs à base d'un diène conjugué et d'α-méthylstyrène est décrite en reprenant le principe de blocage des extrémités du bloc poly(alpha-méthylstyrène) pour éviter la dépolymérisation et qui propose une solution pour limiter la quantité de monomère alpha-méthylstyrène résiduel. Lors de la première étape de polymérisation, l'α-méthylstyrène est polymérisé à basse température en présence d'un agent polaire, mais n'est pas totalement converti. Dans un deuxième temps, une petite quantité de diène conjugué est ajouté et polymérisé afin d'obtenir en bout de chaîne un bloc polydiényl vivant pour éviter la dépolymérisation de l'α-méthylstyrène. Dans une troisième étape, en présence d'un autre composé polaire, l'ajout de monomère diène conjugué permet d'insérer l'α-méthylstyrène résiduel de manière statistique. La conversion en α-méthylstyrène peut atteindre 80%. Afin d'obtenir un copolymère à blocs avec des blocs latéraux poly(α-méthylstyrène), le polymère est couplé à l'aide du tétrachlorure de silicone. Il convient de noter que le bloc central du copolymère tribloc est un copolymère statistique poly(butadiène-co-α-méthylstyrène). La contrepartie de cette méthode un peu complexe est que l'on n'aboutit pas à un élastomère thermoplastique parfaitement tribloc poly(α-méthylstyrène)-polydiène-poly(α-méthylstyrène) et les propriétés thermo-mécaniques de ce copolymère ne sont pas celles d'un TPE tribloc dont le bloc central est exempt d' α-méthylstyrène.

Les voies de polymérisation anionique pour former un bloc thermoplastique à base d'α-méthylstyrène d'un élastomère thermoplastique sont donc limitées du fait de l'équilibre réactionnel poly(alpha-méthylstyrène) / alpha-méthylstyrène et donc par la nécessité de mettre en oeuvre divers moyens pour éviter la dépolymérisation de l'alphaméthylstyrène et ses conséquences. En l'absence de ces mises en oeuvre utilisées par le passé, qu'il s'agisse de l'utilisation de co-monomère ou de la stabilisation des blocs polyalphaméthylstyrène vivants, le taux de conversion conduirait à une productivité non-optimisée du procédé de synthèse et à un copolymère dont les propriétés thermo-mécaniques ne seraient celles attendues.

Au vu des procédés de synthèse de l'art antérieur, le but de la présente invention est de proposer un procédé de synthèse simple et présentant une productivité conciliable avec une production industrielle économiquement rentable d'un élastomère thermoplastique à blocs dont au moins un bloc thermoplastique est un poly(α-méthylstyrène).Ce procédé doit permettre de fournir des élastomères thermoplastiques de composition contrôlée dont les blocs thermoplastiques peuvent présenter une masse moléculaire moyenne en nombre supérieure à 15 000 g/mol de manière à atteindre une température de transition vitreuse élevée, supérieure à certaines températures de travail de matériaux à base de tels élastomères, notamment supérieure ou égale à 140°C.

Les inventeurs ont su mettre en évidence contre toute attente que la synthèse d'un copolymère diénique à blocs comprenant au moins un bloc poly(alpha-méthylstyrène) par polymérisation anionique d'un diène conjugué initié par du poly(α-méthylstyrène) vivant pouvait se faire à une température supérieure ou égale à 0°C par adjonction en une seule fois de la totalité du diène conjugué à la solution comprenant l'initiateur polymérique. Cette synthèse permet d'atteindre un taux de conversion élevé de l'a-méthylstyrène, pouvant atteindre 70%, voire 80%.

Ainsi, de manière surprenante, le procédé de l'invention permet de synthétiser de manière simple un élastomère thermoplastique de microstructure et macrostructure contrôlées, dont le ou les blocs thermoplastiques sont des homopolymères de l'α-méthylstyrène et peuvent présenter une température de transition vitreuse supérieure à la température de transition vitreuse du polystyrène, avec une productivité accrue, et sans augmenter la formation d'α-méthylstyrène résiduel. Le procédé selon l'invention est donc tout particulièrement compatible avec une exploitation industrielle.

Ainsi, le but de la présente invention et d'autres sont atteints par un procédé de synthèse simplifié d'un élastomère thermoplastique de type copolymère à blocs dont au moins un des blocs est un élastomère diénique et au moins un autre bloc est un homopolymère poly(α-méthylstyrène), qui consiste à polymériser en une seule étape la totalité du diène conjugué en présence de chaînes anioniques « vivantes » de poly(α-méthylstyrène) à une température supérieure ou égale à 0°C.

L'invention a donc pour objet ce procédé de synthèse d'un élastomère thermoplastique comprenant au moins un bloc polydiène et au moins bloc poly(α-méthylstyrène) dont les étapes de polymérisation comprennent:
- la polymérisation de l'α-méthylstyrène dans un milieu réactionnel de départ comprenant un initiateur de polymérisation anionique et un solvant apolaire en présence composé polaire, le rapport molaire du composé polaire au métal de l'initiateur de polymérisation est d'au moins 0,03 et d'au plus 15, avec un rapport massique du solvant à l'α-méthylstyrène d'au moins 0,5 et d'au plus 5 et à une température supérieure ou égale à 0°C et inférieure à 30°C ;
- l'ajout en une seule fois de la totalité du ou des monomères devant constituer le bloc polydiène ;
- la polymérisation du ou des monomères devant constituer le bloc diénique sur les chaînes poly(α-méthylstyrène) vivantes obtenues précédemment à une température supérieure ou égale à la température de polymérisation de l'α-méthylstyrène.

Avantageusement, le rapport massique du solvant à l'α-méthylstyrène est d'au moins 0,7 et d'au plus 3. Le composé polaire est avantageusement un éther, en particulier le tétrahydrofurane ou l'éthyltétrahydrofurfuyléther, de préférence l'éthyltétrahydrofurfuyléther.

Avantageusement le rapport molaire du composé polaire au métal de l'initiateur de polymérisation est d'au plus 10, de préférence varie de 0,5 à 7.

La température de polymérisation de l'α-méthylstyrène est avantageusement supérieure à 0°C. Avantageusement encore la température de polymérisation de l'α-méthylstyrène est d'au plus 20°C.

Le ou les monomères devant constituer le bloc polydiène comprennent au moins un monomère diène conjugué. Le monomère diène conjugué est avantageusement choisi parmi le butadiène et l'isoprène. Le ou les monomères devant constituer le bloc polydiène peuvent comprendre au moins un autre monomère. Cet autre monomère est avantageusement un monomère vinylaromatique, de préférence le styrène.

L'ajout en une seule fois de la totalité du ou des monomères devant constituer le bloc polydiène peut avantageusement s'accompagner d'un ajout de solvant apolaire.

La température de polymérisation du ou des monomères devant constituer le bloc diénique varie avantageusement de 0°C à 60°C.

La polymérisation du ou des monomères devant constituer le bloc diénique est avantageusement suivi d'une étape de couplage par ajout d'un agent de couplage. L'agent de couplage est avantageusement choisi parmi les composés di-halogénoétains, di-halogénosilanes et dialcoxysilanes.

Ces variantes avantageuses sont combinables entre elles.

De manière surprenante et inattendue, le procédé de l'invention permet d'obtenir un élastomère thermoplastique comprenant au moins un bloc polydiène et au moins un autre bloc poly(α-méthylstyrène), et notamment des élastomère thermoplastiques triblocs avec deux blocs latéraux poly(α-méthylstyrène), les blocs homopolymères de l'α-méthylstyrène présentant une température de transition vitreuse supérieure à la température de transition vitreuse du polystyrène, avec une productivité compatible avec une exploitation industrielle, et ce tout en réduisant la formation d'α-méthylstyrène résiduel sans avoir à mettre en oeuvre une étape de blocage des chaînes poly(α-méthylstyrène) pendant le procédé.

Un autre objet de l'invention est une composition de caoutchouc comprenant un copolymère thermoplastique à blocs obtenu par un tel procédé.

L'invention a aussi pour objet un pneu comprenant dans au moins un de ses éléments constitutifs une telle composition de caoutchouc.

### I- Description détaillée de l'invention

Dans la présente description, sauf indication expresse différente, tous les pourcentages (%) indiqués sont des % en masse.

D'autre part, tout intervalle de valeurs désigné par l'expression "entre a et b " représente le domaine de valeurs allant de plus de a à moins de b (c'est-à-dire bornes a et b exclues) tandis que tout intervalle de valeurs désigné par l'expression " de a à b" signifie le domaine de valeurs allant de a jusqu'à b (c'est-à-dire incluant les bornes strictes a et b). Dans la présente, l'intervalle de valeurs "de a à b" comprend l'intervalle de valeurs "entre a et b".

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Les composés mentionnés dans la description et entrant dans la préparation de polymères ou de compositions de caoutchouc peuvent être d'origine fossile ou biosourcés. Dans ce dernier cas, ils peuvent être, partiellement ou totalement, issus de la biomasse ou obtenus à partir de matières premières renouvelables issues de la biomasse.

Dans la description, les expressions "élastomère diénique" et "polydiène" sont utilisées indifféremment pour avoir la même signification.

Dans la description, le terme "vivant" est utilisé afin de qualifier la capacité des extrémités des chaînes des polymères de maintenir leur réactivité suffisamment longtemps pour permettre de poursuivre la polymérisation sans terminaison et réactions de transfert.

Le procédé selon l'invention est un procédé de synthèse d'un élastomère thermoplastique comprenant au moins un bloc polydiène et au moins un autre bloc poly(α-méthylstyrène).

La première étape des étapes de polymérisation du procédé selon l'invention consiste en la polymérisation d'α-méthylstyrène dans un milieu réactionnel de départ comprenant un initiateur de polymérisation anionique et un solvant. Cette étape permet de fabriquer un homopolymère d'α-méthylstyrène vivant, c'est-à-dire des chaînes homo poly(α-méthylstyrène) vivantes présentant une extrémité active sous forme d'un carbanion.

Le milieu réactionnel de départ comprend un solvant de préférence apolaire aprotique. Par solvant aprotique apolaire, on entend selon l'invention un solvant hydrocarboné inerte qui peut être par exemple un hydrocarbure aliphatique ou alicyclique comme le pentane, l'hexane, l'heptane, l'iso-octane, le cyclohexane, le méthylcyclohexane, ou un hydrocarbure aromatique comme le benzène, le toluène, le xylène, ou les mélanges de ces solvants.

Le rapport massique du solvant à l'α-méthylstyrène est d'au moins 0,5 et d'au plus 5. Avantageusement ce rapport est d'au moins 0,7 et, avantageusement encore, d'au plus 3, ce qui permet de polymériser à une température supérieure à 0°C, voire d'au moins 5°C.

Le milieu réactionnel de départ comprend également un initiateur de polymérisation anionique. L'initiateur de polymérisation selon l'invention permet d'amorcer la polymérisation anionique de l'α-méthylstyrène pour préparer les chaînes poly(α-méthylstyrène)vivantes. En tant qu'initiateur de polymérisation, on peut utiliser un initiateur anionique monofonctionnel , c'est-à-dire possédant un centre actif. On peut citer ceux contenant un métal alcalin tel que le lithium, le sodium ou le potassium. Toutefois un initiateur contenant du lithium est utilisé à titre préférentiel. Comme initiateurs organolithiens conviennent notamment ceux comportant une liaison carbone-lithium. Des composés représentatifs sont les organolithiens aliphatiques ou aromatiques tels que l'éthyllithium, le n-butyllithium (n BuLi), l'isobutyllithium. Comme initiateurs organolithiens conviennent également ceux comportant une liaison azote-lithium. Parmi ceux-ci, on peut citer les amidures de lithium obtenus à partir d'une amine secondaire cyclique, notamment la pyrrolidine et l'hexaméthylèneimine.

Le milieu réactionnel de départ comprend également un composé polaire. Par composé polaire, on entend selon l'invention un composé liquide dans les conditions de polymérisation qui possède un moment dipolaire, sans atome d'hydrogène acide. Par ailleurs, ce composé polaire doit être miscible avec le solvant apolaire utilisé pour l'étape de polymérisation, à la température du milieu réactionnel dans lequel il est présent.

A titre de composé polaire selon l'invention, on peut citer par exemple les amines, les thioéthers, les éthers. Des éthers appropriés pour l'invention sont par exemple les éthers cycliques parmi lesquels le tétrahydrofurane (THF), le tétrahydropyranne, l'éthyltétrahydrofurfuyléther. De préférence le composé polaire est l'éthyltétrahydrofurfuyléther.

Le rapport molaire du composé polaire au métal de l'initiateur de polymérisation est d'au moins 0,03 et d'au plus 15. En dessous de 0,03, la quantité d'agent polaire est insuffisante pour activer le bout de chaîne vivant et la vitesse de polymérisation est très lente. Au-dessus de 15, l'augmentation de la quantité d'agent polaire entraîne entre autre chose une baisse de la flexibilité sur la microstructure du bloc polydiène. Avantageusement le rapport molaire du composé polaire au métal de l'initiateur de polymérisation est d'au plus 10, de préférence il varie de 0,5 à 7.

La température de polymérisation de l'α-méthylstyrène est supérieure ou égale à 0°C et inférieure à 30°C. De telles conditions opératoires permettent de travailler dans des conditions compatibles avec une exploitation industrielle raisonnée. Avantageusement, la température de polymérisation de l'α-méthylstyrène est supérieure à 0°C, voire d'au moins 5°C. Avantageusement, la température de polymérisation de l'α-méthylstyrène est d'au plus 20°C.

Le procédé selon l'invention permet des temps de polymérisation économiquement intéressants au vu des gains et autres avantages du procédé. Ce temps de polymérisation est par exemple avantageusement d'au plus 6 heures, voire d'au plus 3 heures, et peut être d'au moins 30 minutes. L'homme du métier saura déterminer et optimiser le temps de réaction nécessaire à cette étape.

Les conditions opératoires de la polymérisation de l'α-méthylstyrène décrites plus haut permettent d'atteindre un taux de conversion d'au moins 70 % pouvant aller jusqu'à 80%.

Les conditions opératoires de la polymérisation de l'α-méthylstyrène décrites plus haut permettent également d'atteindre des tailles de blocs de poly(α-méthylstyrène) pouvant présenter une masse moléculaire moyenne en nombre supérieure à 15 000 g/mol, voire même supérieure à 20 000 g/mol, de manière à atteindre une température de transition vitreuse élevée, supérieure à certaines températures de travail de matériaux à base de tels élastomères, notamment supérieure ou égale à 140°C.

La deuxième étape des étapes de polymérisation du procédé selon l'invention consiste en l'ajout en une seule fois de la totalité du ou des monomères devant constituer le bloc polydiène. Le ou les monomères comprennent au moins un monomère diénique. En d'autres termes, le procédé selon l'invention ne comprend pas d'ajout fractionné de monomères, notamment en vue de stabiliser les chaînes vivantes poly(α-méthylstyrène).

Le monomère diénique selon l'invention peut être choisi parmi les monomères diènes conjugués ayant de 4 à 12 atomes de carbone. A titre de diènes conjugués conviennent notamment le butadiène-1,3, l'isoprène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. Préférentiellement le monomère diénique est le butadiène-1,3 ou l'isoprène, plus préférentiellement le butadiène-1,3.

Selon des variantes de l'invention, le bloc polydiène est constitué d'un seul monomère diénique.

Selon des variantes de l'invention, le monomère diénique peut être copolymérisé avec au moins un deuxième monomère différent du premier monomère et choisi parmi les monomères pouvant être polymérisé par polymérisation anionique. On peut notamment citer les diènes conjugués, les diènes non conjugués, les monomères vinyliques, les monomères vinylaromatiques.

Les monomères vinyliques aromatiques selon l'invention peuvent être choisis parmi les monomères vinylaromatiques ayant de 8 à 20 atomes de carbone, comme par exemple le styrène, l'ortho-, méta-, para-méthylstyrène, le mélange commercial vinylmésitylène et le vinylnaphtalène.

A titre préférentiel, lorsque le monomère diénique est copolymérisé avec au moins un deuxième monomère différent du premier monomère et choisi parmi les diènes conjugués, celui-ci est le butadiène-1,3 ou l'isoprène.

A titre préférentiel, lorsque le monomère diénique est copolymérisé avec au moins un deuxième monomère différent du premier monomère et choisi parmi les monomères vinylaromatiques, celui-ci est le styrène.

Selon des variantes de l'invention, l'ajout en une seule fois de la totalité du ou des monomères devant constituer le bloc polydiène s'accompagne de l'ajout de solvant apolaire aprotique. Cet ajout de solvant peut avoir lieu avant ou en même temps que l'ajout du ou des monomères. Le solvant est préférentiellement ajouté en même temps que le ou les monomères. Ce solvant est préférentiellement identique à celui du milieu réactionnel de départ et est tel que défini plus haut.

Selon des variantes de l'invention, l'ajout en une seule fois de la totalité du ou des monomères devant constituer le bloc polydiène peut s'accompagner de l'ajout d'un agent modifiant et/ou randomisant afin de contrôler la microstructure du bloc polydiène. Cet ajout d'agent modifiant et/ou randomisant peut avoir lieu avant, après ou en même temps que celui des monomères. Les composés pouvant être utilisés comme de tels agents ainsi que leurs proportions sont connus de l'homme du métier.

La polymérisation du ou des monomères devant constituer le bloc polydiène peut être effectuée de manière connue. On effectue généralement la polymérisation à une température supérieure ou égale à 0°C, de préférence d'au moins 5°C, et d'au plus 60°C, de préférence d'au plus 20°C. On effectue généralement la polymérisation à une température supérieure ou égale à la température de polymérisation de l'α-méthylstyrène.

De manière surprenante, le taux d'α-méthylstyrène résiduel n'augmente pas à l'issue des étapes de polymérisation par rapport à un procédé comprenant une étape de blocage des chaînes poly(α-méthylstyrène) préalablement à l'ajout et la polymérisation du ou des monomères devant constituer le bloc polydiène ; ce qui permet de conclure que les blocs poly(α-méthylstyrène) ne subissent pas davantage de dépolymérisation.

A ce stade, le procédé selon l'invention peut être poursuivi de manière connue en soi par la terminaison de la polymérisation du ou des monomères devant constituer le bloc polydiène et la récupération de l'élastomère thermoplastique.

Selon des variantes avantageuses de l'invention, les étapes de polymérisation sont suivies d'une étape de couplage dans le but de former des élastomères thermoplastiques triblocs présentant des blocs latéraux poly(α-méthylstyrène) et un bloc central polydiène.

Cette étape de couplage s'effectue par l'ajout au milieu réactionnel, à l'issue de la polymérisation du ou des monomères devant constituer le bloc polydiène, d'au moins un agent de couplage. Les températures et temps de réaction sont conformes aux réactions de couplage d'élastomères diéniques et peuvent être aisément déterminés de l'homme du métier.

Le rapport molaire de l'agent de couplage au métal de l'initiateur de polymérisation est alors avantageusement d'au moins 0,35, préférentiellement d'au moins 0,45. En dessous de 0,35, la quantité d'agent de couplage est insuffisante pour coupler toutes les chaînes. On obtient alors un mélange de chaînes diblocs et de chaînes triblocs avec un taux de chaînes couplées, soit tribloc, n'excédant pas 70 %. Généralement, le rapport molaire d'agent de couplage au métal de l'initiateur de polymérisation n'excède pas 0,65, de préférence il est d'au plus 0,55, toujours dans le but de favoriser la formation de chaînes triblocs. En effet, au-delà de ces valeurs, le taux de chaînes triblocs diminue en faveur d'une augmentation du taux de chaînes diblocs.

Selon d'autres variantes encore de l'invention, l'élastomère thermoplastique obtenu peut être multibloc à plus de trois blocs. Ce type de polymères est obtenu principalement lorsque la terminaison de la polymérisation du ou des monomères devant constituer le bloc polydiène est effectuée par l'ajout d'un agent d'étoilage.

Cette étape d'étoilage s'effectue par l'ajout au milieu réactionnel d'au moins un agent de d'étoilage n-fonctionnel. Le rapport molaire de l'agent d'étoilage au métal de l'initiateur de polymérisation est alors avantageusement centré autour de la valeur 1/n, n étant le nombre de fonctions réactives de l'agent d'étoilage.

Les agents de couplage ou d'étoilage sont connus de l'homme du métier. Ils contiennent généralement un atome de silicium ou d'étain, substitué par au moins deux groupements réactifs vis à vis de l'extrémité carbanion des chaînes polymères vivantes. A titre d'exemple d'agent de couplage, on peut citer les di-halogénoétains et les di-halogénosilanes, notamment le dichlorure de dibutyl étain ou le diméthyldichlorosilane, ou encore les dialcoxysilanes. A titre d'exemple d'agent d'étoilage, on peut citer les tri ou tétra-halogénoétain et les tri ou tétra-halogénosilanes, notamment le trichlorure de butyl étain, le tétrachlorure d'étain et le tétrachlorure de silicium, ou encore les trialcoxysilanes ou les tétraalcoxysilanes.

Les variantes des différentes étapes du procédé de l'invention sont combinables entre elles dans la limite de leur compatibilité. De la même manière, les aspects particuliers ou préférentiels dans une même variante ou de variantes différentes sont combinables entre eux dans la mesure où ils sont compatibles.

Selon une variante avantageuse du procédé de l'invention, celui-ci présente au moins une, au moins deux, au moins trois, au moins quatre, au moins cinq, au moins six, au moins sept, au moins huit, de préférence toutes les caractéristiques suivantes :
- le composé polaire est un éther, en particulier le tétrahydrofurane ou l'éthyltétrahydrofurfuyléther, de préférence l'éthyltétrahydrofurfuyléther
- le rapport molaire du composé polaire au métal de l'initiateur de polymérisation est d'au plus 10, de préférence varie de 0,5 à 7 ;
- rapport massique du solvant à l'α-méthylstyrène d'au moins 0,7 et d'au plus 3
- la température polymérisation de l'α-méthylstyrène est d'au moins 5°C, et de préférence inférieure à 40°C ;
- le monomère diène conjugué est le butadiène ou l'isoprène;
- l'ajout en une seule fois de la totalité du ou des monomères devant constituer le bloc polydiène s'accompagne d'un ajout de solvant apolaire.
- la température de la polymérisation du ou des monomères devant constituer le bloc diénique est supérieure à 0°C, de préférence au plus 60°C ;
- la polymérisation du ou des monomères devant constituer le bloc diénique est suivie d'une étape de couplage au moyen d'un agent de couplage, le rapport molaire de l'agent de couplage au métal de l'initiateur de polymérisation est d'au moins 0,35 et d'au plus 0,65 ;
l'agent de couplage est choisi parmi les di-halogénoétains et les di-halogénosilanes, notamment le dichlorure de dibutyl étain ou le diméthyldichlorosilane, ou encore les dialcoxysilanes.

Le procédé selon l'invention comporte un nombre réduit d'étapes et présente une productivité conciliable avec une production industrielle économiquement rentable, notamment en permettant d'atteindre un taux de conversion de l'α-méthylstyrène élevé allant jusqu'à 80%. Le procédé est en outre tout à fait reproductible.

Les élastomères thermoplastiques à blocs conformes à l'invention peuvent avantageusement être utilisés dans des compositions de caoutchouc pour la fabrication de certains objets soumis notamment à des conditions d'utilisation spécifiques où les températures dépassent les 100°C. On peut bien entendu penser à des applications aussi variées que les contenants remplis à chaud, les emballages stérilisables, les compositions adhésives, les pneumatiques, les revêtements routiers ou de toiture.

Des compositions de caoutchouc pour application aux pneumatiques pour véhicules automobiles font également l'objet de l'invention. Ces compositions de caoutchouc comprennent au moins un élastomère thermoplastique à blocs obtenu par le procédé de synthèse selon l'invention. Cet élastomère thermoplastique à blocs est alors plus particulièrement constitué d'au moins un bloc élastomère choisi parmi un polybutadiène ou un copolymère de butadiène, préférentiellement un polybutadiène.

Cet élastomère thermoplastique à blocs peut être utilisé en coupage avec au moins un ou plusieurs élastomères conventionnellement utilisés dans les compositions de caoutchouc pour pneumatiques et choisis parmi le caoutchouc naturel, les élastomères diéniques synthétiques, éventuellement couplés et/ou étoilés et/ou encore partiellement ou entièrement fonctionnalisés, les élastomères synthétiques autres que diéniques, voire des polymères autres que des élastomères.

Selon des variantes de l'invention, la composition de caoutchouc peut également comprendre une charge renforçante. Celle-ci peut être choisie parmi les charges inorganiques, notamment alumineuses ou siliceuses, telles que la silice, les charges organiques, telles que du noir de carbone, ou les mélanges de ces charges.

Ces compositions peuvent en outre comprendre divers additifs usuellement présents dans les compositions de caoutchouc notamment destinées aux pneumatiques pour véhicules automobiles. On citera par exemple des agents de liaison gomme/charge, des charges non renforçantes, divers agents de mise en oeuvre ou autres stabilisants, des plastifiants, des pigments, des anti-oxydants, des agents anti-fatigue, des cires anti-ozonantes, des promoteurs d'adhésion, des résines renforçantes ou plastifiantes, un système de réticulation à base soit de soufre et/ou de peroxyde et/ou de bismaléimides, des activateurs de réticulation comprenant du monoxyde de zinc et de l'acide stéarique, des dérivés guanidiques, des huiles d'extension, un ou plusieurs agents de recouvrement de la silice.

Les caractéristiques précitées de la présente invention, ainsi que d'autres, seront mieux comprises à la lecture de la description suivante de plusieurs exemples de réalisation de l'invention, donnés à titre illustratif et non limitatif.

### II - Exemples

### Mesures et tests utilisés

### Résonnance magnétique nucléaire du proton (RMN ¹H) : mesure de la concentration en α-méthylstyrène résiduel dans le milieu réactionnel

Pour les mesures, est utilisé un spectromètre Bruker Avance III HD 500 MHz équipé d'une sonde Bruker cryo-BBFO z-grad 5 mm.

Les spectres RMN 1D ¹H sont enregistrés à partir d'une expérience simple impulsion avec un angle de basculement de 30°, le nombre de répétitions est de 128 accumulations avec un délai de recyclage de 5 secondes afin d'être dans des conditions quantitatives.

Les expériences RMN bidimensionnelles ¹H / ¹³C de type HSQC (Heteronuclear Single Quantum Cohérence) et HMBC (Heteronuclear Multiple-Bond Correlation) pour les corrélations ¹H / ¹³C à courte ('J) et longue distance (³J) respectivement sont utilisées pour confirmer la structure des molécules observées.

Les expériences sont réalisées à température ambiante à 20°C.

25 mg d'échantillon sont solubilisés dans 1 mL de disulfure de carbone (CS₂) ; 70 µL de cyclohexane deutéré (C₆D₁₂) sont ajoutés à la solution de polymère pour le verrouillage du champ.

L'axe des déplacements chimiques ¹H est calibré par rapport à l'impureté protonée du CS₂ δ(¹H) = 7,18 ppm, référencée sur le TMS (δ(¹H) = 0 ppm).

Les spectres RMN contiennent les signaux caractéristiques des motifs butadiène et alphaméthylstyrène. En plus de ceux-ci, un signal isolé attribué à la molécule alphaméthylstyrène libre est observé. Le déplacement chimique de deux protons du monomère alphaméthylstyrène libre est donc détecté entre 7.25ppm et 7.30ppm.

La structure du monomère est confirmée par la lecture des cartes de corrélations bidimensionnelles ¹H / ¹³C.

Les quantifications ont été effectuées à partir de l'intégration des spectres RMN 1D ¹H à l'aide du logiciel Topspin.

Les zones d'intégration considérées pour la quantification sont les zones de signatures spectrales du polymère connues de l'homme de l'art et la zone de signature spectrale de l'alphaméthylstyrène libre. La quantification molaire de monomère libre par rapport à la matrice élastomérique peut alors être calculée comme suit.

% molaire de monomère alphaméthylstyrène libre = intégrale de un proton de monomère alphaméthylstyrène libre * 100 / Σ (intégrales de un proton de chaque motif élastomère).

### Chromatographie d'exclusion stérique (SEC) : mesure de la masse molaire moyenne des copolymères

La technique SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) ainsi que la masse molaire au pic (Mp) peuvent être déterminées et l'indice de polymolécularité (Ip = Mw/Mn) calculé via un étalonnage dit de MOORE.

Il n'y a pas de traitement particulier de l'échantillon de polymère avant analyse. Celui-ci est simplement solubilisé dans le solvant d'élution à une concentration d'environ 1 g.L-1. Puis la solution est filtrée sur filtre de porosité 0,45µm avant injection.

L'appareillage utilisé est une chaîne chromatographique "WATERS alliance". Le solvant d'élution est soit le tétrahydrofurane antioxydé, avec BHT (hydroxytoluène butylé) de 250 ppm, soit le tétrahydrofurane sans antioxydant, le débit est de 1 mL.min-1, la température du système de 35° C et la durée d'analyse de 45 min. Les colonnes utilisées sont soit un jeu de trois colonnes AGILENT de dénomination commerciale "POLYPORE" soit un jeu de quatre colonnes AGILENT de dénomination commerciale deux "PL GEL MIXED D" et deux "PL GEL MIXED E". Le volume injecté de la solution de l'échantillon de polymère est 100 µL. Le détecteur est un réfractomètre différentiel "WATERS 2410" et le logiciel d'exploitation des données chromatographiques est le système "WATERS EMPOWER".

Les masses molaires moyennes calculées sont relatives à une courbe d'étalonnage réalisée à partir de polybutadiènes étalons.

### Analyse calorimétrique différentielle (DSC) : mesure de la Tg des copolymères

La caractérisation des Tg de la partie centrale et des blocs polyalphaméthylstyrène est réalisée par une mesure DSC (appareil DSC de chez Mettler Toledo). L'appareil est en fonctionnement sous atmosphère Hélium. Un prélèvement de 10 à 20 mg d'élastomère est déposé dans un creusé utilisé classiquement par l'homme de l'art pour réaliser des mesures de Tg.

L'échantillon est d'abord placé en isotherme à +25°C pendant 2 minutes puis refroidi à - 150°C à une vitesse de 50°C par minute. Un isotherme est alors appliqué à -150°C pendant 10 minutes. Une première chauffe commence alors de -150°C à +10°C à la vitesse de 20°C par minute et se poursuit de 10°C à 250°C à la vitesse de 50°C par minute. L'échantillon subit alors une trempe pour atteindre -150°C à la vitesse maximum autorisée par l'appareil. L'échantillon est alors maintenu en isotherme à -150°C pendant 15 minutes. La deuxième chauffe commence alors de -150°C à +10°C à la vitesse de 20°C par minute (plage de mesure de la Tg de la partie centrale du tribloc) et se poursuit de +10°C à +250°C à la vitesse de 50°C par minute (plage de mesure de la Tg du bloc polyalphaméthylstyrène). Dans cette mesure seule la deuxième chauffe est exploitée.

### Exemples de synthèse d'élastomères thermoplastiques

### Exemple comparatif

Dans un réacteur de 500 mL, on introduit 20 g de méthylcylohexane, 10 g d'α-méthylstyrène et 1,25 mmol de tétrahydrofurfuryléthyléther. Après neutralisation des impuretés avec du n-butyl lithium, 0,25 mmol de s-butyl lithium sont introduits. Après 2 h 30 à T = 5 °C, la conversion en α-méthylstyrène mesurée par extrait sec est de 70 %. L'analyse du polymère par chromatographie d'exclusion stérique montre la présence de 3 populations : M_{p,1} = 4500 g/mol (1,4%), M_{p,2} = 20 400 g/mol (96,2%), M_{p,3} = 38 600 g/mol (2,4 %).

A l'issue de ces 2 h 30 à 5 °C, 2 g de butadiène sont introduits dans le réacteur puis deux minutes après cet ajout de butadiène, un mélange contenant 16,75 g de butadiène et 100 g de méthylcyclohexane dont les impuretés ont été préalablement neutralisées avec du n-butyl lithium est introduit dans le réacteur. Le milieu réactionnel est maintenu à 5 °C pendant 15 minutes. A l'issue de ces 15 minutes, la conversion en butadiène est de 83 %. La concentration en α-méthylstyrène résiduel mesurée par RMN ¹H est de 0,16 mol/L.

0,12 mmol de diméthyldichlorosilane sont ensuite introduits dans le réacteur. Le milieu réactionnel est maintenu à 5 °C pendant 30 minutes. Le polymère obtenu à l'issue de cette étape de couplage est un polymère tribloc poly(α-méthylstyrène)-b-polybutadiène-b-poly(α-méthylstyrène) qui présente deux populations par analyse SEC : M_{p,1} = 74 000 g/mol (4,8%) et M_{p,2} = 140 000 g/mol (95,2 mol.%) et 2 Tg par analyse DSC : 177 °C et - 24 °C.

### Exemple selon l'invention

Dans un réacteur de 500 mL, on introduit 20 g de méthylcylohexane, 10 g d'α-méthylstyrène et 1,25 mmol de tétrahydrofurfuryléthyléther. Après neutralisation des impuretés avec du n-butyl lithium, 0,25 mmol de s-butyl lithium sont introduits. Après 2 h 30 à T = 5 °C, la conversion en α-méthylstyrène mesurée par extrait sec est de 72 %. L'analyse du polymère par chromatographie d'exclusion stérique montre la présence de 3 populations : M_{p,1} = 4300 g/mol (1,1%), M_{p,2} = 21 100 g/mol (96,5%), M_{p,3} = 38 900 g/mol (2,4 %).

A l'issue de ces 2 h 30 à 5 °C, un mélange contenant 18,75 g de butadiène et 100 g de méthylcyclohexane dont les impuretés ont été préalablement neutralisées avec du n-butyl lithium est introduit dans le réacteur. Le milieu réactionnel est maintenu à 5 °C pendant 15 minutes. A l'issue de ces 15 minutes, la conversion en butadiène est de 81 %. La concentration en α-méthylstyrène résiduel mesurée par RMN ¹H est de 0,15 mol/L.

0,12 mmol de diméthyldichlorosilane sont ensuite introduits dans le réacteur. Le milieu réactionnel est maintenu à 5 °C pendant 30 minutes. Le polymère obtenu à l'issue de cette étape de couplage est un polymère tribloc poly(α-méthylstyrène)-b-polybutadiène-b-poly(α-méthylstyrène) qui présente deux populations par analyse SEC : M_{p,1} = 76 000 g/mol (4,5%) et M_{p,2} = 143 000 g/mol (95,5 mol.%) et 2 Tg par analyse DSC : 178 °C et - 24 °C.

De manière inattendue, il apparaît donc avec le procédé selon l'invention, que la concentration en α-méthylstyrène résiduel n'est pas augmentée en l'absence d'ajout de butadiène intermédiaire par rapport à un procédé qui comprend et impose un tel ajout en vue de stabiliser les chaînes vivantes de poly(α-méthylstyrène) et d'en empêcher la dépolymérisation.

Ainsi le procédé selon l'invention, propose une synthèse simplifiée et présentant une productivité conciliable avec une production industrielle économiquement rentable d'un élastomère thermoplastique à blocs dont au moins un bloc thermoplastique est un poly(α-méthylstyrène). La masse moléculaire moyenne en nombre d'un tel bloc peut atteindre une valeur supérieure à 20 000 g/mol de manière à atteindre une température de transition vitreuse élevée, bien supérieure à 140°C.

## Revendications

1. Procédé de synthèse d'un élastomère thermoplastique comprenant au moins un bloc polydiène et au moins un autre bloc homopoly(α-méthylstyrène), dont les étapes de polymérisation comprennent successivement :
- la polymérisation de l'α-méthylstyrène dans un milieu réactionnel de départ comprenant un initiateur de polymérisation anionique et un solvant apolaire en présence d'un composé polaire, le rapport molaire du composé polaire au métal de l'initiateur de polymérisation d'au moins 0,03 et d'au plus 15, avec un rapport massique du solvant à l'α-méthylstyrène d'au moins 0,5 et d'au plus 5 et à une température supérieure ou égale à 0°C et inférieure à 30°C ;
- l'ajout en une seule fois de la totalité du ou des monomères devant constituer le bloc polydiène, le ou les monomères comprenant au moins un monomère diène conjugué ;
- la polymérisation du ou des monomères devant constituer le bloc diénique sur les chaînes poly(α-méthylstyrène) vivantes obtenues précédemment, à une température supérieure ou égale à la température de polymérisation de l'α-méthylstyrène.

2. Procédé selon la revendication 1, **caractérisé en ce que** le rapport massique du solvant à l'α-méthylstyrène est d'au moins 0,7 et d'au plus 3.

3. Procédé selon la revendication 1 ou 2, **caractérisé en ce que** le composé polaire est un éther, en particulier le tétrahydrofurane ou l'éthyltétrahydrofurfuyléther.

4. Procédé selon la revendication 3, **caractérisé en ce que** le composé polaire est l'éthyltétrahydrofurfuyléther

5. Procédé selon l'une quelconque des revendications 1 à 4, **caractérisé en ce que** le rapport molaire du composé polaire au métal de l'initiateur de polymérisation est d'au plus 10, de préférence varie de 0,5 à 7.

6. Procédé selon l'une quelconque des revendications 1 à 5, **caractérisé en ce que** la température de polymérisation de l'α-méthylstyrène est supérieure à 0°C, préférentiellement d'au moins 5°C et préférentiellement encore d'au plus 20°C.

7. Procédé selon l'une quelconque des revendications 1 à 6, **caractérisé en ce que** le monomère diène conjugué est choisi parmi le butadiène et l'isoprène, de préférence c'est le butadiène.

8. Procédé selon l'une quelconque des revendications 1 à 7, **caractérisé en ce que** le ou les monomères devant constituer le bloc polydiène comprennent outre le monomère diène conjugué, au moins un autre monomère.

9. Procédé selon la revendication 8, **caractérisé en ce que** l'autre monomère est un monomère vinylaromatique, de préférence le styrène.

10. Procédé selon l'une quelconque des revendications 1 à 9, **caractérisé en ce que** l'ajout en une seule fois de la totalité du ou des monomères devant constituer le bloc polydiène s'accompagne d'un ajout de solvant apolaire.

11. Procédé selon l'une quelconque des revendications 1 à 10, **caractérisé en ce que** la température de polymérisation du ou des monomères devant constituer le bloc diénique varie de 0°C à 60°C.

12. Procédé selon l'une quelconque des revendications 1 à 11, **caractérisé en ce que** la polymérisation du ou des monomères devant constituer le bloc diénique est avantageusement suivi d'une étape de couplage par ajout d'un agent de couplage au milieu réactionnel avec un rapport molaire de l'agent de couplage au métal de l'initiateur de polymérisation d'au moins 0,35 et d'au plus 0,65.

13. Procédé selon la revendication 12, **caractérisé en ce que** l'agent de couplage est choisi parmi les composés di-halogénoétains, di-halogénosilanes et dialcoxysilanes.

## Patentansprüche

1. Verfahren zur Synthese eines thermoplastischen Elastomers, das mindestens einen Polydien-Block und mindestens einen anderen Homopoly(α-methylstyrol)-Block umfasst, wobei die Polymerisationsschritte aufeinanderfolgend Folgendes umfassen:
- Polymerisation von α-Methylstyrol in einem Ausgangsreaktionsmedium, das einen anionischen Polymerisationsinitiator und ein unpolares Lösungsmittel umfasst, in Gegenwart einer polaren Verbindung, wobei das Molverhältnis von polarer Verbindung zu Metall des Polymerisationsinitiators mindestens 0,03 und höchstens 15 beträgt, mit einem Massenverhältnis von Lösungsmittel zu α-Methylstyrol von mindestens 0,5 und höchstens 5 und bei einer Temperatur größer als oder gleich 0 °C und kleiner als 30 °C;
- Zugabe der Gesamtheit des Monomers bzw. der Monomere, das bzw. die den Polydien-Block bilden soll bzw. sollen, auf einmal, wobei das Monomer bzw. die Monomere mindestens ein konjugiertes Dienmonomer umfasst bzw. umfassen;
- Polymerisation des Monomers bzw. der Monomere, das bzw. die den Dien-Block bilden soll bzw. sollen, an den zuvor erhaltenen lebenden Poly(α-methylstyrol)-Ketten bei einer Temperatur größer oder gleich der Polymerisationstemperatur des α-Methylstyrols.

2. Verfahren nach Anspruch 1, **dadurch gekennzeichnet, dass** das Massenverhältnis von Lösungsmittel zu α-Methylstyrol mindestens 0,7 und höchstens 3 beträgt.

3. Verfahren nach Anspruch 1 oder 2, **dadurch gekennzeichnet, dass** es sich bei der polaren Verbindung um einen Ether, insbesondere Tetrahydrofuran oder Ethyltetrahydrofurfurylether, handelt.

4. Verfahren nach Anspruch 3, **dadurch gekennzeichnet, dass** es sich bei der polaren Verbindung um Ethyltetrahydrofurfurylether handelt.

5. Verfahren nach einem der Ansprüche 1 bis 4, **dadurch gekennzeichnet, dass** das Molverhältnis von polarer Verbindung zu Metall des Polymerisationsinitiators höchstens 10 beträgt, vorzugsweise im Bereich von 0,5 bis 7 liegt.

6. Verfahren nach einem der Ansprüche 1 bis 5, **dadurch gekennzeichnet, dass** die Polymerisationstemperatur des α-Methylstyrols größer als 0 °C, bevorzugt mindestens 5 °C und weiter bevorzugt höchstens 20 °C beträgt.

7. Verfahren nach einem der Ansprüche 1 bis 6, **dadurch gekennzeichnet, dass** das konjugierte Dienmonomer aus Butadien oder Isopren ausgewählt ist und vorzugsweise Butadien ist.

8. Verfahren nach einem der Ansprüche 1 bis 7, **dadurch gekennzeichnet, dass** das Monomer bzw. die Monomere, das bzw. die den Polydien-Block bilden soll bzw. sollen, außer dem konjugierten Dienmonomer mindestens ein anderes Monomer umfasst bzw. umfassen.

9. Verfahren nach Anspruch 8, **dadurch gekennzeichnet, dass** es sich bei dem anderen Monomere um ein vinylaromatisches Monomer, vorzugsweise Styrol, handelt.

10. Verfahren nach einem der Ansprüche 1 bis 9, **dadurch gekennzeichnet, dass** die auf einmal erfolgende Zugabe der Gesamtheit des Monomers bzw. der Monomere, das bzw. die den Polydien-Block bilden soll bzw. sollen, mit der Zugabe von unpolarem Lösungsmittel einhergeht.

11. Verfahren nach einem der Ansprüche 1 bis 10, **dadurch gekennzeichnet, dass** die Polymerisationstemperatur des Monomers bzw. der Monomere, das bzw. die den Dien-Block bilden soll bzw. sollen, im Bereich von 0 °C bis 60 °C liegt.

12. Verfahren nach einem der Ansprüche 1 bis 11, **dadurch gekennzeichnet, dass** auf die Polymerisation des Monomers bzw. der Monomere, das bzw. die den Dien-Block bilden soll bzw. sollen, vorteilhafterweise ein Kupplungsschritt durch Zugabe eines Kupplungsmittels zum Reaktionsmedium mit einem Molverhältnis von Kupplungsmittel zu Metall des Polymerisationsinitiators von mindestens 0,35 und höchstens 0,65 folgt.

13. Verfahren nach Anspruch 12, **dadurch gekennzeichnet, dass** das Kupplungsmittel aus Dihalogenzinn-, Dihalogensilan- und Dialkoxysilan-Verbindungen ausgewählt wird.

## Claims

1. Method for synthesizing a thermoplastic elastomer comprising at least one polydiene block and at least one other block homopoly(α-methylstyrene), where the polymerization steps comprise in succession:
- polymerizing α-methylstyrene in a starting reaction medium comprising an anionic polymerization initiator and an apolar solvent in the presence of a polar compound, the molar ratio of the polar compound to the metal of the polymerization initiator being at least 0.03 and at most 15, with a mass ratio of the solvent to the α-methylstyrene of at least 0.5 and at most 5, and at a temperature greater than or equal to 0°C and less than 30°C;
- adding in one go the entirety of the monomer or monomers which are to form the polydiene block, the monomer or monomers comprising at least one conjugated diene monomer;
- polymerizing the monomer or monomers which are to form the diene block onto the living poly(α-methylstyrene) chains obtained previously, at a temperature greater than or equal to the polymerization temperature of the α-methylstyrene.

2. Method according to Claim 1, **characterized in that** the mass ratio of the solvent to the α-methylstyrene is at least 0.7 and at most 3.

3. Method according to Claim 1 or 2, **characterized in that** the polar compound is an ether, more particularly tetrahydrofuran or ethyl tetrahydrofurfuryl ether.

4. Method according to Claim 3, **characterized in that** the polar compound is ethyl tetrahydrofurfuryl ether.

5. Method according to any one of Claims 1 to 4, **characterized in that** the molar ratio of the polar compound to the metal of the polymerization initiator is at most 10 and preferably ranges from 0.5 to 7.

6. Method according to any one of Claims 1 to 5, **characterized in that** the polymerization temperature of the α-methylstyrene is greater than 0°C, preferably at least 5°C and more preferably at most 20°C.

7. Method according to any one of Claims 1 to 6, **characterized in that** the conjugated diene monomer is selected from butadiene and isoprene and preferably is butadiene.

8. Method according to any one of Claims 1 to 7, **characterized in that** the monomer or monomers which are to form the polydiene block comprise at least one other monomer further to the conjugated diene monomer.

9. Method according to Claim 8, **characterized in that** the other monomer is a vinylaromatic monomer, preferably styrene.

10. Method according to any one of Claims 1 to 9, **characterized in that** the addition in one go of the entirety of the monomer or monomers which are to form the polydiene block is accompanied by an addition of apolar solvent.

11. Method according to any one of Claims 1 to 10, **characterized in that** the polymerization temperature of the monomer or monomers which are to form the diene block ranges from 0°C to 60°C.

12. Method according to any one of Claims 1 to 11, **characterized in that** the polymerization of the monomer or monomers which are to form the diene block is advantageously followed by a step of coupling by addition of a coupling agent to the reaction medium, with a molar ratio of the coupling agent to the metal of the polymerization initiator of at least 0.35 and at most 0.65.

13. Method according to Claim 12, **characterized in that** the coupling agent is selected from dihalotin, dihalosilane and dialkoxysilane compounds.
